# EUROPÄISCHE PATENTSCHRIFT

(11) **EP 2 783 516 B1**
(45) Veröffentlichungstag und Bekanntmachung des Hinweises auf die Patenterteilung: **12.12.2018**
(21) Anmeldenummer: 12794885.9
(22) Anmeldetag: 29.10.2012
(51) Int. Cl.: H04H 20/62, H04N 21/41, H04N 21/214, H04N 21/414, H04N 21/4363, H04W 84/00, H04W 88/06

(54) **UNTERHALTUNGSNETZWERK FÜR PASSAGIERE IN EINEM VERKEHRSMITTEL**
ENTERTAINMENT NETWORK FOR PASSENGERS IN A VEHICLE
RÉSEAU DE DIVERTISSEMENT POUR PASSAGERS DANS UN VÉHICULE

(30) Priorität: 22.11.2011 DE 102011086830
(43) Veröffentlichungstag der Anmeldung: 01.10.2014
(73) Patentinhaber: Lufthansa Systems GmbH & Co. KG, 65479 Raunheim (DE)
(72) Erfinder: HOMMEL, Peter, 61348 Bad Homburg (DE); LIEBE, Jörg, 65191 Wiesbaden (DE)
(74) Vertreter: dompatent von Kreisler Selting Werner - Partnerschaft von Patent- und Rechtsanwälten mbB
(86) Internationale Anmeldenummer: PCT/EP2012/071386
(87) Internationale Veröffentlichungsnummer: WO 2013/075910

(56) Entgegenhaltungen:
- WO-A2-03/032503
- WO-A2-2005/000437
- US-A1- 2009 180 430

## Beschreibung

Die Erfindung betrifft ein Unterhaltungsnetzwerk für Passagiere in einem Verkehrsmittel, wie z. B. einem Flugzeug, einem Schiff, einem Bus oder einem Zug, und ein Verfahren zur Übertragung von Video- und/oder Audiodaten zur Unterhaltung von Passagieren in einem Verkehrsmittel.

Bekannt sind sogenannte Inflight-Entertainment-Systeme, bei denen Filme auf einen in einen Passagiersitz integrierten Inseat-Monitor übertragen werden. Der Inseat-Monitor ist in die Rückseite der Rückenlehne des jeweils vorderen Passagiersitzes integriert. Die Filme sind als Videodaten auf einem zentralen Datenserver gespeichert und werden auf Anforderung durch den Passagier über eine dem Monitor zugehörige Bedieneinheit über Datenkabel übertragen. Hierbei muss jeder Inseat-Monitor eine eigene Datenkabelverbindung mit dem Datenserver haben, damit die Videodaten individuell zu jedem Inseat-Monitor übertragbar sind. Hierzu ist eine große Anzahl an Datenkabeln erforderlich, die meist in dem Boden der Flugkabine verlegt werden. Insbesondere bei modernen Großraumjets mit bis zu 600 Sitzplätzen ist die Menge erforderlicher Datenkabel für ein Inflight-Entertainment-System beträchtlich und mit entsprechendem Gewicht und Wartungsaufwand verbunden. Zudem birgt jedes stromführende Kabel in einem Flugzeug ein potentielles Risiko für Kabelbrände.

Des weiteren sind WLAN-Netzwerke in Passagierflugzeugen bekannt, mit denen es einem Passagier ermöglicht wird, mit seinem individuellen Notebook, Handy, PDA oder anderem Passagier-Endgerät eine Verbindung zum Internet (World Wide Web) herzustellen oder E-Mails zu empfangen. Die anfallenden Datenmengen bei der Nutzung des Internets oder beim Versenden von E-Mails betragen einen Bruchteil der Datenmengen beim Übertragen von Videofilmen, zum Beispiel per Videostreaming. Die bekannten WLAN-Netzwerke in Flugzeugen sind nicht in der Lage, große Datenmengen, die beim Übertragen von Filmen oder Musik anfallen, zeitgleich und unabhängig voneinander an eine Vielzahl von Passagieren zu übertragen. Ein WLAN-Accesspoint der bekannten WLAN-Netzwerke in Flugzeugen kann selbst bei der Nutzung von Internet- oder E-Mail-Diensten nur eine begrenzte Anzahl von gleichzeitigen Funkverbindungen verwalten. Eine Verwendung der bekannten WLAN-Netzwerke zur Übertragung von Videofilmen in einem Inflight-Entertainment-System in Flugzeugen scheidet vor diesem Hintergrund aus. So ein System ist aus WO 03/032503 bekannt.

Der Erfindung liegt die Aufgabe zugrunde, ein flexibles und technisch vereinfachtes Inflight-Entertainment-System für Passagiere in einem Verkehrsmittel bereitzustellen.

Das erfindungsgemäße Unterhaltungsnetzwerk ist definiert durch die Merkmale von Patentanspruch 1. Das erfindungsgemäße Verfahren zur Übertragung von Video- und/oder Audiodaten ist definiert durch die Merkmale von Patentanspruch 7.

Das Unterhaltungsnetzwerk für Passagiere weist mindestens einen Datenserver für Video- und/oder Audiodaten, mindestens eine mit dem Datenserver verbundene Routing-Einrichtung und mindestens ein einem Passagier für die Dauer einer Reise zur Verfügung gestelltes Wiedergabegerät zur Wiedergabe der Video-/Audiodaten auf. Unter der Dauer einer Reise wird die Dauer des Aufenthalts des Passagiers in dem Verkehrsmittel zu dessen Beförderung verstanden, also z. B. die Dauer eines Fluges. Die Routing-Einrichtung ist zur kabellosen Breitbandübertragung der Video-/Audiodaten an mindestens zwanzig, vorzugsweise an mindestens sechzig Teilnehmer gleichzeitig und in mindestens zwei verschiedenen Frequenzbändern unabhängig voneinander ausgebildet. Die Wiedergabegeräte sind zur kabellosen Kommunikation mit der Routing-Einrichtung ausgebildet und nur zum Empfang der Daten eines ersten Frequenzbandes ausgelegt. Ein zweites Frequenzband ist zum Empfang nur durch individuelle Passagier-Endgeräte, wie zum Beispiel Notebooks, Tablet-PCs, Handys PDAs und so weiter, ausgebildet.

Das Wiedergabegerät kann einem Passagiersitzplatz fest zugewiesen sein und einen Sitzplatzmonitor aufweisen, der von einem Passagiersitz getragen wird. Alternativ oder ergänzend können Wiedergabegeräte tragbare Computer, wie z. B. Tablet-PCs, mit einem Touchscreen, sein, die einem Passagier zu Beginn der Reise oder des Fluges leihweise für die Dauer der Reise oder des Fluges zur Verfügung gestellt werden. Sämtliche Wiedergabegeräte, d. h. sowohl die einem Passagiersitzplatz fest zugewiesenen Geräte als auch die Passagieren geliehenen tragbaren Geräte kommunizieren mit dem Datenserver über die Routing-Einrichtung per WLAN. Entgegen dem herkömmlichen Prinzip, jeden Sitzplatzmonitor mit dem Datenserver zu verkabeln, stehen erfindungsgemäß die Wiedergabegeräte in Funkverbindung mit dem Datenserver per WLAN. Die Routing-Einrichtung ist hierbei zur kabellosen Breitbanddatenübertragung an mindestens zwanzig, vorzugsweise an mindestens sechzig Teilnehmer gleichzeitig ausgebildet. Auf diese Weise können die Video- und/oder Audiodaten an eine Vielzahl von Geräten während einer Fahrt oder eines Fluges übertragen werden.

Hierbei sind die Wiedergabegeräte einem Passagier lediglich leihweise zur Verfügung gestellt, so dass aktuelle, neu erschienene Videofilme oder Musik zur Wiedergabe angeboten werden können, ohne dass die Gefahr besteht, dass diese Daten von Passagieren entwendet oder manipuliert werden. Die Übertragung zu den Wiedergabegeräten erfolgt dabei in einem ersten Frequenzband, welches sich von einem zweiten Frequenzband unterscheidet, in welchem Video- und/oder Audiodaten an Passagier-Endgeräte übertragen werden. Passagier-Endgeräte sind hierbei von Flugpassagieren selbst mitgenommene, eigene Geräte, auf denen nur weniger aktuelle Filme und Musik wiedergegeben werden dürfen. Der Datenserver sollte die Wiedergabegeräte hierzu vorzugsweise von den Passagier-Endgeräten unterscheiden können, damit eine gezielte Auswahl der zu übertragenden Daten an die jeweiligen Geräte seitens des Servers möglich ist.

Die Passagiergeräte sollten vorzugsweise in der Lage sein, mit den Wiedergabegeräten über die Routing-Einrichtung zu kommunizieren. Von besonderem Vorteil ist es, wenn das Passagiergerät eines Passagiers mit dessen Wiedergabegerät eine Kommunikationsverbindung aufbauen kann, die beispielsweise eine Bedienung des Wiedergabegeräts mit Hilfe des Passagiergeräts ermöglicht. Diese Kommunikationsverbindung sollte ausschließlich zwischen dem Wiedergabegerät und dem betreffenden Passagiergerät erfolgen und nicht durch andere Geräte gestört werden können. Hierzu kann das Wiedergabegerät auf Anforderung durch den Passagier einen Code generieren und anzeigen, der anschließend von dem Passagier auf dessen Passagiergerät eingegeben wird. Der Code dient zur eindeutigen Identifikation des jeweiligen Wiedergabegeräts, zu dem eine Kommunikationsverbindung ausgehend von einem Passagiergerät, aufgebaut werden soll. Alternativ oder ergänzend ist auch eine direkte Infrarot-Verbindung oder anderweitige drahtlose Kommunikationsverbindung zwischen einem Passagiergerät und einem Wiedergabegerät denkbar.

Auf den Passagier-Endgeräten werden die Video- und die Audiodaten als Datenstream wiedergegeben, wobei die übertragenen Daten nach der jeweiligen Wiedergabe unverzüglich und unwiderruflich automatisch gelöscht werden. Nach erfolgter Wiedergabe verbleiben somit keine Audio- oder Videodaten auf einem Passagier-Endgerät. Auf den Wiedergabegeräten, d. h. den einem Sitzplatz fest zugewiesenen Geräten mit Sitzplatzmonitor und auf den Leihgeräten, die Passagieren für die Dauer einer Reise leihweise ausgehändigt werden, werden die wiederzugebenden Daten zunächst vollständig gespeichert. Die Übertragung und Speicherung der Daten erfolgt vorzugsweise vor Beginn der Reise. Im Fall einer Störung oder eines Ausfalls der Funkverbindung können die Daten dennoch von den Wiedergabegeräten wiedergegeben werden. Eine Speicherung der Video- und Audiodaten auf den Wiedergabegeräten ist deswegen unkritisch, weil diese Geräte der jeweiligen Fluggesellschaft gehören und den Passagieren nur leihweise für die Dauer einer Reise zur Verfügung gestellt werden. Passagiere haben somit keine Möglichkeit, die gespeicherten Daten zu entwenden oder zu manipulieren.

Vorzugsweise sind die Wiedergabegeräte, d. h. die einem Sitzplatz fest zugewiesenen Geräte mit Sitzplatzmonitor oder die Leihgeräte, mit einem Mikrophon versehen, welches dazu dient, ein akustisches Signal zu empfangen und bei Erhalt des Signals die Wiedergabe automatisch zu unterbrechen. Während der Beförderung von Passagieren besteht häufig die Notwendigkeit, die Passagiere durch Lautsprechermitteilungen, sogenannte "Public Announcements", über Besonderheiten zu informieren, oder beispielsweise zum Schließen des Sicherheitsgurts aufzufordern. Die serverunabhängige, dezentralisierte Wiedergabe der Video- und Audiodaten auf den Wiedergabegeräten kann auf diese Weise unterbrochen werden, wobei denkbar ist, einen Zweikanalton als Signal auszusenden, welches die Wiedergabe unterbrechen soll, und einen besonderen Schlusston zu senden, um die Wiedergabe anschließend wieder zu starten.

Vorzugsweise sollten die Wiedergabegeräte zusätzlich zu der serverunabhängigen, dezentralisierten Wiedergabe nach vorheriger Speicherung der wiederzugebenden Daten auch in der Lage sein, Daten von dem Datenserver als Datenstream wiederzugeben. Dadurch werden Liveübertragungen, beispielsweise von außen an dem Verkehrsmittel positionierten Kameras, ermöglicht.

Weiterhin ist denkbar, die Wiedergabegeräte, d. h. die einem Sitzplatz fest zugewiesenen Geräte und die Leihgeräte, mit Kameras oder Bewegungssensoren zu versehen, die eine berührungslose Bedienung der Geräte durch eine automatisierte Bewegungserkennung ermöglichen. Auf diese Weise kann ein Passagier durch geeignete Handbewegung das Gerät berührungslos bedienen.

Auf Anforderung durch einen Passagier an einem Wiedergabegerät oder an einem eigenen Passagier-Endgerät werden die gewünschten Video- und/oder Audiodaten von dem Datenserver zu dem jeweiligen Gerät übertragen. Die Daten werden von dem Datenserver an die Routing-Einrichtung übermittelt, die die Daten in dem ersten Frequenzband nur an das betreffende Wiedergabegerät übermittelt und in dem zweiten Frequenzband an das individuelle Passagier-Endgerät übermittelt. Die Routing-Einrichtung ist hierbei zur kabellosen Breitband-Datenübertragung ausgebildet, zum Beispiel nach dem WLAN-Standard IEEE 802.11n für die Kommunikation mit den Passagier-Endgeräten. Hierbei kann jeder Passagier mit einem typischen WLAN-fähigen Endgerät über die Routing-Einrichtung mit dem Datenserver eine Verbindung herstellen, um die Video-/Audiodaten als Datenstream auf sein Endgerät zu übertragen und über dieses wiederzugeben. Dieselben Video-/Audiodaten können zeitgleich an verschiedene Passagier-Endgeräte und an verschiedene Wiedergabegeräte übertragen werden. Die Übertragung der Daten auf die Wiedergabegeräte in dem ersten, von dem zweiten verschiedenen Frequenzband verhindert eine gegenseitige Beeinflussung der Kommunikation Datenserver-Wiedergabegerät und Datenserver-Passagier-Endgerät.

Auf diese Weise wird vermieden, dass Fehlfunktionen eines Passagier-Endgeräts die Datenübertragung zu den Wiedergabegeräten stören. Zudem ist eine mögliche absichtliche Beeinflussung der Kommunikation Datenserver-Wiedergabeterminal durch ein Passagier-Endgerät verhindert.

Mit dem erfindungsgemäßen Unterhaltungsnetzwerk und mit dem erfindungsgemäßen Datenübertragungsverfahren entfällt die Notwendigkeit für Kabelverbindungen zwischen einem Datenserver und Wiedergabeterminals. Durch die entfallenden Kabelverbindungen wird Gewicht eingespart und das Risiko von Kabelbränden reduziert. Die Passagiersitze sind einfacher ein- und auszubauen, so dass eine flexible und einfach veränderbare Anordnung von Passagiersitzen dem Verkehrsmittel, z. B. in der Flugkabine, ermöglicht wird. Zudem ist das Unterhaltungsnetzwerk auch einfach in Verkehrsmitteln und insbesondere in Flugzeugen nachrüstbar.

Vorzugsweise enthält die Routing-Einrichtung einen WLAN-Router, zum Beispiel nach dem IEEE-Standard 802.11n für die Netzwerkverbindung zu den Passagier-Endgeräten. Damit wird eine Anbindung der Passagier-Endgeräte an das Internet und zugleich eine Breitband-Datenübertragung als Datenstream von Videofilmen auf eine Vielzahl von Passagier-Endgeräten zu gleicher Zeit und unabhängig voneinander ermöglicht.

Die Funkübertragung von der Routing-Einrichtung zu der Kommunikationseinrichtung eines Wiedergabegeräts erfolgt vorteilhafterweise in einem ISM-Funkfrequenzband. Ein ISM-Funkfrequenzband (Industrial, Scientific and Medical Band) ist ein Frequenzband, das von Hochfrequenzgeräten in Industrie, Wissenschaft und Medizin in häuslichen und ähnlichen Bereichen genutzt werden kann. Ein typisches ISM-Frequenzband liegt im Bereich zwischen 5,725 und 5,875 GHz. Typische Frequenzbänder nach dem 802.11n IEEE-WLAN-Standard liegen im Bereich zwischen 5,15 und 5,35 GHz oder im Bereich von 5,47 bis 5,475 GHz. Diese Frequenzbänder sind von dem genannten ISM-Frequenzband verschieden und beeinflussen einander nicht. Zudem stört eine Breitband-Datenübertragung in diesen Frequenzbändern nicht den sicheren Reiseablauf oder Flugbetrieb.

Für die Wiedergabegeräte können spezielle Einstellungen (zum Beispiel Intrusion Detection, Quality of Service, Bandbreiten-Management etc.) sowohl in der Routing-Einrichtung (Accesspoint) oder in den Kommunikationseinrichtungen der Wiedergabegeräte vorgenommen werden. Zur Absicherung der Kommunikation zwischen Wiedergabegeräten und dem Datenserver an Bord des Verkehrsmittels können spezielle Einstellungen vorgenommen werden, die hohe Stabilität und Leistung des Systems ermöglichen.

Die Video- und Audiodaten werden vorteilhafterweise *On-Demand,* also auf Anforderung eines Passagiers auf das Anzeigegerät übertragen. Die Filme werden in Form von komprimierten und verschlüsselten Videodateien auf dem Datenserver vorgehalten. Über eine Web-Applikation kann ein Passagier den Video- oder Audioinhalt auswählen. Nach der Auswahl wird der gewünschte Inhalt über das kabellose Funknetz auf das betreffende Passagier-Endgerät als einzelner dezidierter Datenstrom pro Passagier verteilt. Auf dem Anzeigegerät wird der Datenstrom entschlüsselt und dargestellt. Zur Absicherung der Inhalte kann ein Digital-Rights-Management-System eingesetzt werden. Auf diese Weise können große Datenmengen, wie sie typischerweise bei Videofilmen in digitaler Form auftreten, zeitlich unabhängig voneinander parallel auf eine große Anzahl an Geräten übertragen werden. Insbesondere in modernen Großraumjets mit bis zu 600 Sitzplätzen ist das erfindungsgemäße Unterhaltungsnetzwerk und das entsprechende Verfahren zur Datenübertragung von erheblichem Vorteil.

Im Folgenden werden anhand der Figuren vier Ausführungsbeispiele der Erfindung näher erläutert.

Es zeigen:
- Figur 1: ein erstes Ausführungsbeispiel des Unterhaltungsnetzwerks in schematischer Darstellung,
- Figur 2: ein zweites Ausführungsbeispiel des Unterhaltungsnetzwerks in schematischer Darstellung,
- Figur 3: ein drittes Ausführungsbeispiel des Unterhaltungsnetzwerks in schematischer Darstellung und
- Figur 4: ein viertes Ausführungsbeispiel des Unterhaltungsnetzwerks in schematischer Darstellung.

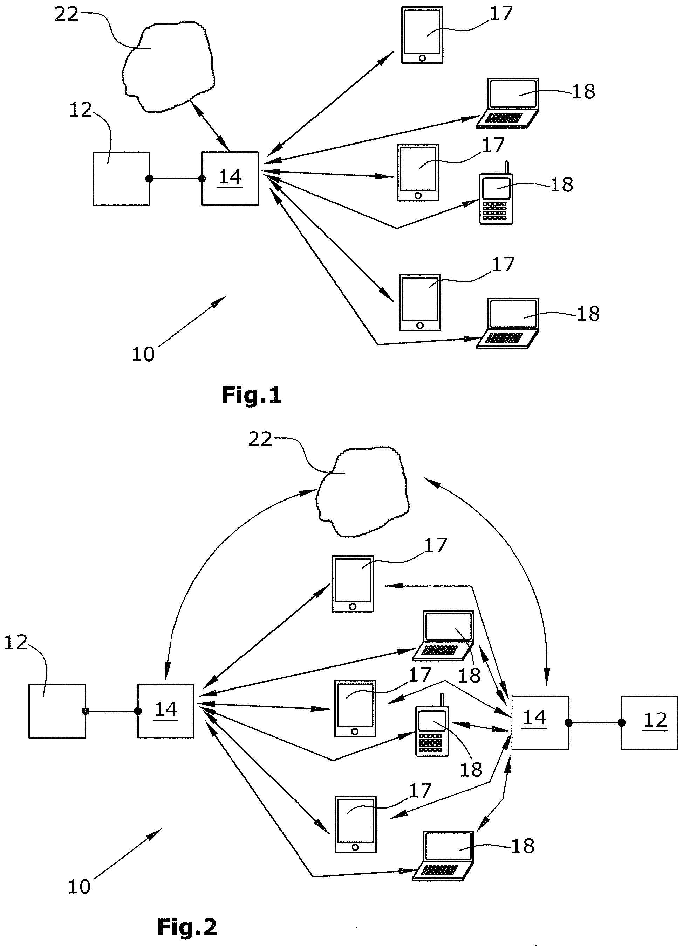

Figur 1 zeigt ein erstes Ausführungsbeispiel des erfindungsgemäßen Unterhaltungsnetzwerks 10. Das Unterhaltungsnetzwerk 10 enthält einen Datenserver 12, auf dem Audio- und Videodaten in gespeicherter Form hinterlegt sind. Die Audiodaten können in Form einzelner Musikstücke, einzelner Musikalben verschiedener Interpreten oder Playlists zur Wiedergabe mehrerer verschiedener Musikstücke hintereinander nach Art eines Radioprogramms vorliegen. Die Videodaten sind typischerweise Kinofilme, Spielfilme oder dergleichen mit zugehörigen Audiodaten.

Mit dem Datenserver 12 ist eine Routing-Einrichtung 14 über eine herkömmliche Netzwerkkabelverbindung verbunden. Die Routing-Einrichtung 14 dient zur kabellosen Breitband-Datenübertragung der Daten auf dem Server innerhalb der Flugkabine. Hierzu ist die Routing-Einrichtung nach Art eines WLAN-Accesspoints ausgebildet und enthält einen entsprechenden WLAN-Router.

Jede Routing-Einrichtung 14 ist zum automatischen Herstellen einer kabellosen Funkverbindung mit Wiedergabegeräten 17 in Form von Tablet-PCs und mit Passagier-Endgeräten 18 für eine Breitband-Datenverbindung ausgebildet. Jeder Tablet-PC weist einen Touchscreen zur Bedienung auf und wird einem Passagier zu Beginn eines Flugs leihweise für die Dauer des Fluges zur Verfügung gestellt.

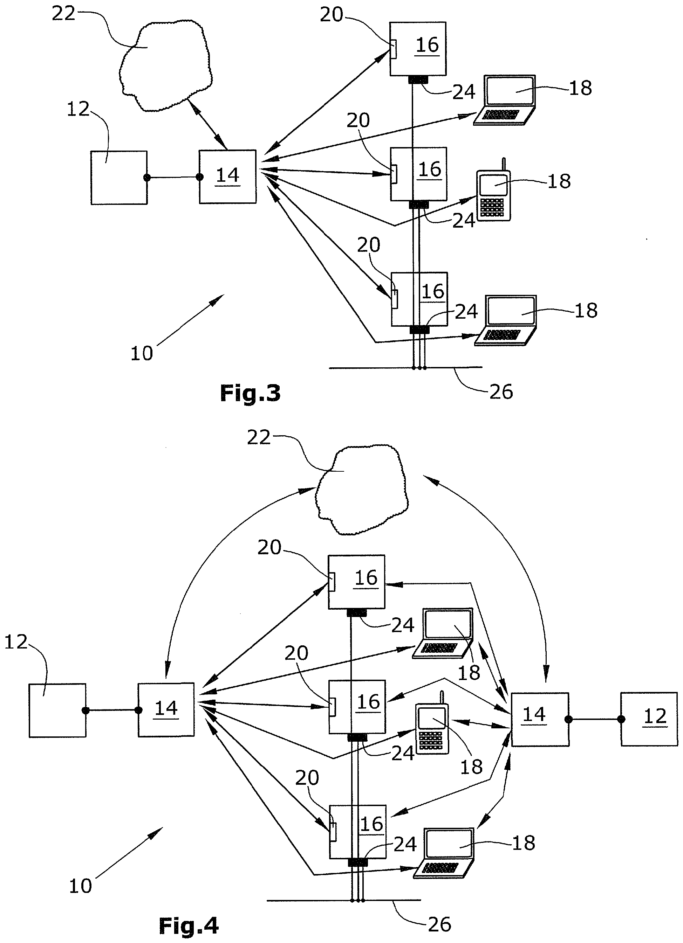

Das Ausführungsbeispiel gemäß Figur 3 unterscheidet sich von dem Ausführungsbeispiel gemäß Figur 1 dadurch, dass das Wiedergabegerät 16 kein Tablet-PC oder anderweitiger tragbarer Computer ist, sondern einem Passagiersitz fest zugeordnet ist. Hierbei weist jedes Wiedergabegerät 16 einen Sitzplatzmonitor (Inseat-Monitor) auf, der fest in einen Passagiersitz eingebaut ist. Jedes Wiedergabegerät 16 weist zudem eine Kommunikationseinrichtung 20 auf, die die Funkverbindung mit der Routing-Einrichtung 14 (WLAN-Accesspoint) herstellt und aufrechterhält.

Ein Großteil der Passagiere trägt heutzutage ein eigenes individuelles Passagier-Endgerät 18 in Form eines Notebooks, eines Handys oder eines PDAs (Personal Digital Assistent) mit sich. Diese Geräte sind typischerweise zum automatischen Herstellen von WLAN-Funkverbindungen nach internationaler Standardisierung ausgebildet, um beispielsweise in einem Heimnetzwerk oder in einem Internetcafe mit einem dort bereitgestellten WLAN-Router eine drahtlose Funkdatenverbindung aufzubauen, über die der Zugang ins Internet oder zum Senden und Empfangen von E-Mails möglich ist. Um Passagier-Endgeräte 18 auch in einem Flugzeug für den Empfang der Video-/Audiodaten nutzen zu können, bietet die Routing-Einrichtung 14 die Möglichkeit einer WLAN-Verbindung mit deren WLAN-Router. Der WLAN-Router ist nach dem IEEE-Standard 802.11n ausgebildet und ermöglicht dadurch eine Breitband-Datenübertragung in Form von Datenstreams zu einer Vielzahl von Passagier-Endgeräten 18 unabhängig voneinander. Darüber hinaus ist die Routing-Einrichtung 14 an das World Wide Web 22 angebunden. Dadurch hat jeder Passagier die Möglichkeit, über sein Notebook, Handy oder PDA eine Verbindung mit dem Datenserver 12 herzustellen, um die dort gespeicherten Filme oder Audiodaten als Datenstream auf dem eigenen Endgerät 18 zu empfangen und wiederzugeben. Alternativ oder ergänzend kann über die Routing-Einrichtung 14 eine Verbindung mit dem World Wide Web 22 hergestellt werden, um im Internet zu surfen oder E-Mails zu senden und zu empfangen.

Der WLAN-Standard IEEE 802.11n nutzt hierbei im 5 GHz Frequenzband die Frequenzen im Bereich zwischen 5,15 und 5,35 GHz und im Bereich zwischen 5,47 und 5,475 GHz. Jeder Passagier kann mit seinem Endgerät 18 eine kabellose Funkverbindung mit der Routing-Einrichtung 14 herstellen und nach dem Video-on-Demand-Prinzip Filme oder Musik von dem Datenserver 12 auf eigenen Wunsch abrufen.

Um zu verhindern, dass fehlerhafte Passagier-Endgeräte 18 die Datenübertragung von dem Datenserver 12 auf die Sitzplatzmonitore stören, erfolgt die Datenübertragung zwischen Routing-Einrichtung 14 und Kommunikationseinrichtung 20 der Wiedergabegeräte 16, 17 in einem anderen Frequenzband, welches ein Übersprechen zu der WLAN-Verbindung mit den Passagier-Endgeräten 18 verhindert. Das für die Datenübertragung zu den Wiedergabegeräten 16, 17 vorgesehene Frequenzband ist ein ISM (Industrial Scientific and Medical) Band, welches zur Nutzung durch Hochfrequenzgeräte in Industrie, Wissenschaft, Medizin und in häuslichen und ähnlichen Bereichen vorgesehen ist. Das in den Ausführungsbeispielen verwendete ISM-Frequenzband liegt im Bereich zwischen 5,725 und 5,875 GHz. Darüber hinaus werden übliche sogenannte Intrusion Detection, Quality of Service und Bandbreiten-Management eingesetzt, um Stabilität und Sicherheit der Kommunikation zwischen Datenserver 12 und Wiedergabegeräten 16, 17 zu ermöglichen. Auch mögliche absichtliche Angriffe von Passagier-Endgeräten 18 auf die Datenverbindung zu den Wiedergabegeräten 16, 17 sind dadurch verhindert.

Jedes Wiedergabegerät 16 gemäß Figur 3 ist über einen Schnellkontakt 24 in Form einer Stromschiene zwischen dem Passagiersitz und dem Boden der Flugkabine mit einem in den Boden der Flugkabine integrierten Spannungsversorgungsnetz 26 verbunden. Alternativ ist auch denkbar, dass der Schnellkontakt 24 eine lösbare Verbindung zwischen dem Wiedergabegerät und dem Passagiersitz schafft. Die Spannungsversorgung jedes Sitzplatzmonitors und jeder Kommunikationseinrichtung 20 erfolgen dadurch über das herkömmliche Bordnetz und unabhängig von der kabellosen Datenverbindung. Die Stromschiene ermöglicht einen einfachen Ein- und Ausbau jedes Passagiersitzes und dadurch eine flexible Anordnung der Passagiersitze und Veränderung der Sitzanordnung in der Flugkabine. Aufgrund der kabellosen Datenverbindung zwischen Routing-Einrichtung 14 und Kommunikationseinrichtungen 20 entfallen die sonst für diese Datenverbindung notwendigen Kabel, woraus eine Gewichtsersparnis und ein geringeres Risiko für Kabelbrände resultieren. Die Möglichkeit einer flexiblen Anordnung der Passagiersitze wird nicht beeinträchtigt.

Die Komponenten und deren Funktions- und Wirkweisen des Ausführungsbeispiels in Figur 2 entsprechen denen des Ausführungsbeispiels in Figur 1. Im Folgenden werden die Unterschiede des zweiten Ausführungsbeispiels gegenüber dem ersten Ausführungsbeispiel erläutert:
Bei dem Ausführungsbeispiel des Unterhaltungsnetzwerks 10 gemäß Figur 2 sind zwei Routing-Einrichtungen 14 und zwei Datenserver 12 vorgesehen. Auf jedem Datenserver 12 sind dieselben Video- und Audiodaten hinterlegt, wobei jeder Datenserver 12 mit genau einer Routing-Einrichtung 14 durch Datenkabel verbunden ist. Jede der beiden Routing-Einrichtungen 14 ermöglicht das Herstellen kabelloser Datenverbindungen zu den Wiedergabegeräten 17 und zu den Passagier-Endgeräten 18 in jeweils demselben Frequenzband. Die Entscheidung, welches Wiedergabegerät 17 und welches Passagier-Endgerät 18 mit welcher der beiden Routing-Einrichtungen 14 die Funkverbindung herstellt, wird anhand der Signalstärke des Sende-/Empfangssignals getroffen. Das heißt mit anderen Worten, dass ein Wiedergabegerät 17 und ein Passagier-Endgerät 18 mit derjenigen Routing-Einrichtung 14 in Verbindung tritt, mit der die höchste Signalqualität bei der Funkverbindung erzielt wird. Aufgrund der gegenüber dem ersten Ausführungsbeispiel höheren Anzahl an Routing-Einrichtungen 14 kann eine entsprechend höhere Anzahl von Passagieren mit den Daten auf den Servern 12 versorgt werden. Auf diese Weise kann auch in modernen Großraumjets mit 600 Passagiersitzplätzen jeder Passagier dieselben Video-/Audiodaten abrufen.

Das Ausführungsbeispiel gemäß Figur 4 entspricht demjenigen gemäß Figur 2 bis auf die Wiedergabegeräte 16. Die Wiedergabegeräte 16 in Figur 4 entsprechen denen mit Sitzplatzmonitor in Figur 3.

## Patentansprüche

1. Unterhaltungsnetzwerk (10) für Passagiere in einem Verkehrsmittel, mit
mindestens einem Datenserver (12) für Video- und/oder Audiodaten, mindestens einer mit dem Datenserver (12) verbundenen Routing-Einrichtung (14),
mindestens einem einem Passagier leihweise für die Dauer einer Reise zur Verfügung gestellten Wiedergabegerät (16, 17) zur Wiedergabe der Video-/Audiodaten,
**dadurch gekennzeichnet, dass**
die Routing-Einrichtung (14) zur kabellosen Breitband-Übertragung der Video-/Audiodaten an mindestens 20, vorzugsweise an mindestens 60 Teilnehmer gleichzeitig und in mindestens zwei verschiedenen Frequenzbändern unabhängig voneinander ausgebildet ist,
das Wiedergabegerät (16) zur kabellosen Kommunikation mit der Routing-Einrichtung (14) ausgebildet ist,
wobei das Wiedergabegerät nur zum Empfang der Daten eines ersten Frequenzbandes ausgelegt ist und ein zweites, von dem ersten verschiedenes Frequenzband zum Empfang nur durch individuelle Passagier-Endgeräte (18), die selbst mitgenommene eigene Geräte von Passagieren sind, wie zum Beispiel Notebooks, Tablet-PCs, PDAs etc., ausgebildet ist und
wobei der Datenserver (12) in der Lage ist, jedes Passagier-Endgerät (18) von einem Wiedergabegerät (16, 17) zu unterscheiden und einem Passagier-Endgerät (18) andere Video-/Audiodaten anbietet als einem Wiedergabegerät (16, 17).

2. Unterhaltungsnetzwerk (10) nach Anspruch 1, **dadurch gekennzeichnet, dass** die Routing-Einrichtung (14) zur Kommunikation mit dem World Wide Web (22) ausgebildet ist.

3. Unterhaltungsnetzwerk (10) nach einem der vorhergehenden Ansprüche, **dadurch gekennzeichnet, dass** das Wiedergabegerät (16) einem Passagiersitz fest zugewiesen ist und einen Sitzplatzmonitor aufweist, der von einem Passagiersitz getragen wird, wobei das Wiedergabegerät (16) vorzugsweise über einen Schnellkontakt (24) mit einem Spannungsversorgungsnetz (26) im Boden der Flugkabine verbunden ist.

4. Unterhaltungsnetzwerk (10) nach einem der vorhergehenden Ansprüche, **dadurch gekennzeichnet, dass** das Wiedergabegerät (17) ein tragbarer Computer und vorzugsweise ein Tablet-PC ist.

5. Unterhaltungsnetzwerk (10) nach einem der Ansprüche 1 bis 3, **dadurch gekennzeichnet, dass** die Routing-Einrichtung (14) einen Breitband-WLAN-Router nach dem IEEE-Standard 802.11n aufweist und zur Funkübertragung in einem ISM-Frequenzband ausgebildet ist.

6. Unterhaltungsnetzwerk (10) nach Anspruch 4, **dadurch gekennzeichnet, dass** das Wiedergabegerät (16, 17) zur Funkübertragung in dem ISM-Frequenzband, beispielsweise zwischen 5,7 und 5,9 GHz, ausgebildet ist und das zweite Frequenzband einen Frequenzbereich zwischen 5,1 und 5,5 GHz umfasst.

7. Verfahren zur Übertragung von Video- und/oder Audiodaten zur Unterhaltung von Passagieren in einem Verkehrsmittel, **gekennzeichnet durch** die Schritte:
- Speichern der Video- und/oder Audiodaten auf mindestens einem Datenserver (12),
- Übertragen der Video- und/oder Audiodaten von dem Datenserver (12) zu mindestens einer Routing-Einrichtung (14) zur kabellosen Breitband-Datenübertragung,
- kabelloses Übertragen der Video-/Audiodaten als Datenstream in einem ersten Frequenzband von der Routing-Einrichtung (14) zu mindestens 20, vorzugsweise mindestens 60 Passagieren für die Dauer der Reise leihweise zur Verfügung gestellten Wiedergabegeräten (16, 17) zur Wiedergabe der Video-/Audiodaten auf Anforderung eines Passagiers auf dem Wiedergabegerät (16, 17),
- kabelloses Übertragen von Video-/Audiodaten in einem zweiten, von dem ersten Frequenzband verschiedenen Frequenzband von der Routing-Einrichtung (14) zu mindestens einem individuellen Passagier-Endgerät (18), die selbst mitgenommene eigene Geräte von Passagieren sind, wie zum Beispiel einem Notebook, einem Tablet-PC oder einem PDA zur Speicherung der Video-/Audiodaten auf Anforderung des Passagiers auf dessen Endgerät (18),
wobei der Datenserver (12) in der Lage ist, jedes Passagier-Endgerät (18) von einem Wiedergabegerät (16, 17) zu unterscheiden und einem Passagier-Endgerät (18) andere Video-/Audiodaten anbietet, als einem Wiedergabegerät (16, 17).

8. Verfahren nach Anspruch 7, **dadurch gekennzeichnet, dass** das Wiedergabegerät (17) ein tragbarer Computer und vorzugsweise ein Tablet-PC ist.

9. Verfahren nach einem der Ansprüche 7 bis 8, **dadurch gekennzeichnet, dass** das Passagier-Endgerät (18) und/oder das Wiedergabegerät (16, 17) auf Anforderung durch das Gerät (16, 17, 18) über die Routing-Einrichtung (14) mit dem World Wide Web (22) verbunden wird.

10. Verfahren nach einem der Ansprüche 7 bis 9, **dadurch gekennzeichnet, dass** das Wiedergabegerät (16) einem Passagiersitz fest zugewiesen ist und einen Sitzplatzmonitor aufweist, der von einem Passagiersitz getragen wird, wobei das Wiedergabegerät (16) vorzugsweise über einen Schnellkontakt (24) aus einem Spannungsversorgungsnetz (26) im Boden der Passagierkabine mit Strom gespeist wird.

11. Verfahren nach einem der Ansprüche 7 bis 10, **dadurch gekennzeichnet, dass** die Video-/Audiodaten in dem zweiten Frequenzband von einem Breitband-WLAN-Router der Routing-Einrichtung (14) nach dem IEEE-Standard 802.11n, beispielsweise zwischen 5,1 und 5,5 GHz, übertragen werden.

12. Verfahren nach einem der Ansprüche 7 bis 11, **dadurch gekennzeichnet, dass** das erste Frequenzband, in dem die Video-/Audiodaten von der Routing-Einrichtung (14) auf das Wiedergabegerät (16,17) übertragen werden, ein ISM-Frequenzband, beispielsweise zwischen 5,7 und 5,9 GHz, ist.

13. Verfahren nach einem der Ansprüche 7 bis 12, **dadurch gekennzeichnet, dass** die Video-/Audiodaten zeitgleich und unabhängig voneinander auf mindestens ein Wiedergabegerät (16, 17) und mindestens ein Passagier-Endgerät (18) übertragbar sind.

14. Verfahren nach einem der Ansprüche 7 bis 13, **dadurch gekennzeichnet, dass** eine Kommunikation zwischen einem Passagier-Endgerät (18) und jedem Wiedergabegerät (16, 17) verhindert ist.

15. Verfahren nach einem der Ansprüche 7 bis 14, **dadurch gekennzeichnet, dass** der Datenserver zum Übertragen und Installieren von Softwareprogrammen auf den Geräten (16, 17, 18), beispielsweise zur Wiedergabe der Audio-/Videodaten, ausgebildet ist.

## Claims

1. An entertainment network (10) for passengers in a means of transportation, comprising
at least one data server (12) for video and/or audio data,
at least one routing means (14) connected with the data server (12),
at least one playback device (16, 17) for playing back the video/audio data, the device being provided to a passenger on a lending basis for the duration of a trip,
**characterized in that**
the routing means (14) is configured for a wireless broadband transmission of the video/audio data to at least 20, preferably at least 60 participants at the same time and in at least two different frequency bands independently of one another,
the playback device (16) is configured for a wireless communication with the routing means (14),
the playback device being configured to only receive the data of a first frequency band and a second frequency band, which is different from the first band, being configured such that it is received only by individual passenger terminals (18), which are passenger-owned devices brought by the passengers, such as notebooks, tablet PCs, PDAs etc., for example, and
wherein the data server (12) is able to distinguish each passenger terminal (18) from a playback device (16, 17) and to offer other video/audio data to a passenger terminal (18) than to a playback device (16, 17).

2. The entertainment network (10) of claim 1, **characterized in that** the routing means (14) is configured for communication with the World Wide Web (22).

3. The entertainment network (10) of one of the preceding claims, **characterized in that** the playback device (16) is fixedly allocated to a passenger seat and comprises a seat monitor supported by a passenger seat, the playback device (16) preferably being connected with a voltage supply network (26) in the floor of the aircraft cabin via a quick connector (24).

4. The entertainment network (10) of one of the preceding claims, **characterized in that** the playback device (17) is a portable computer and preferably a tablet PC.

5. The entertainment network (10) of one of claims 1 to 3, **characterized in that** the routing means (14) comprises a broadband WLAN router according to IEEE standard 802.11n and is configured for radio transmission in an ISM frequency band.

6. The entertainment network (10) of claim 4, **characterized in that** the playback device (16, 17) is configured for radio transmission in the ISM frequency band, for example between 5.7 and 5.9 GHz, and the first frequency band comprises a frequency range between 5.1 and 5.5 GHz.

7. A method for transmitting video and/or audio data in order to entertain passengers in a means of transportation, **characterized by** the steps of:
- storing the video and/or audio data on at least one data server (12),
- transmitting the video and/or audio data from the data server (12) to at least one routing means (14) for wireless broadband transmission,
- wirelessly transmitting the video/audio data as a data stream in a first frequency band from the routing means (14) to at least 20, preferably at least 60 playback devices (16, 17) for playing back the video/audio data on the playback device (16, 17) upon a request by a passenger, the playback devices being provided to passengers on a lending basis for the duration of a trip,
- wirelessly transmitting video/audio data in a second frequency band, different from the first frequency band, from the routing means (14) to at least one individual passenger terminal (18), such as a notebook, a tablet PC or a PDA, for example, for the purpose of storing the video/audio data on a passenger's terminal (18) upon the passenger's request,
wherein the data server (12) is able to distinguish each passenger terminal (18) from a playback device (16, 17) and to offer other video/audio data to a passenger terminal (18) than to a playback device (16, 17).

8. The method of claim 7, **characterized in that** the playback device (17) is a portable computer and preferably a tablet PC.

9. The method of one of claims 7 to 8, **characterized in that** the passenger terminal (18) and/or the playback device (16, 17) is connected upon demand through the device (16, 17, 18) with the World Wide Web (22) via the routing means (14).

10. The method of one of claims 7 to 9, **characterized in that** the playback device (16) is fixedly allocated to a passenger seat and includes a seat monitor supported by a passenger seat, the playback device (16) preferably being supplied with power from a voltage supply network (26) in the floor of the aircraft cabin via a quick connector (24).

11. The method of one of claims 7 to 10, **characterized in that** the video/audio data are transmitted in the second frequency band by a broadband WLAN router of the routing means (14) according to IEEE standard 802.11n, for example between 5.1 and 5.5 GHz.

12. The method of one of claims 7 to 11, **characterized in that** the first frequency band, in which the video/audio data are transmitted from the routing means (14) to the playback device (16, 17), is an ISM frequency band, for example between 5.7 and 5.9 GHz.

13. The method of one of claims 7 - 12, **characterized in that** the video/audio data can be transmitted simultaneously and independently from each other to at least one playback device (16, 17) and at least one passenger terminal (18).

14. The method of one of claims 7 - 13, **characterized in that** a communication between a passenger terminal (18) and each playback device (16, 17) is prevented.

15. The method of one of claims 7 to 14, **characterized in that** the data server is configured for transmitting and installing software programs on the devices (16, 17, 18), for example for playing back the audio/video data.

## Revendications

1. Réseau de divertissement (10) pour des passagers dans un moyen de transport, avec
- au moins un serveur de données (12) pour des données audio et/ou vidéo ;
- au moins un dispositif de routage (14) qui est relié au serveur de données (12) ;
- au moins un appareil de lecture (16, 17), lequel est destiné à la lecture des données audio et/ou vidéo et lequel est mis à la disposition d'un passager sous forme de prêt pour la durée d'un trajet ;
**caractérisé en ce que**
- le dispositif de routage (14) est conçu en vue de la transmission sans fil, à haut débit, des données audio et/ou vidéo de manière simultanée vers au moins 20, de préférence vers au moins 60 utilisateurs, et dans au moins deux bandes de fréquences différentes, indépendantes l'une de l'autre ;
- l'appareil de lecture (16) est conçu en vue de la communication sans fil avec le dispositif de routage (14) ;
selon lequel l'appareil de lecture) n'est configuré que pour la réception des données d'une première bande de fréquence ; et
selon lequel une deuxième bande de fréquence, différente de la première, est mise en place en vue de la réception uniquement par des terminaux (18) individuels des passagers, lesquels sont des appareils que les passagers ont eux-mêmes emmenés avec eux, tels que par exemple des ordinateurs portables, des tablettes numériques PC, des assistants numériques personnels ; et
selon lequel le serveur de données (12) est en mesure de distinguer chaque terminal de passager (18) par rapport à un appareil de lecture (16, 17) et propose au terminal de passager (18) d'autres données audio et/ou vidéo qu'à un appareil de lecture (16, 17).

2. Réseau de divertissement (10) selon la revendication 1, **caractérisé en ce que** le dispositif de routage (14) est conçu en vue de la communication avec la toile mondiale (World Wide Web) (22).

3. Réseau de divertissement (10) selon l'une des revendications précédentes, **caractérisé en ce que** l'appareil de lecture (16) est associé de manière fixe à un siège de passager et présente un écran intégré de fauteuil, lequel est supporté par un siège de passager, selon lequel l'appareil de lecture (16) est raccordé à un réseau d'alimentation en tension (26) mis en place dans le plancher de la cabine de l'avion, de préférence par l'intermédiaire d'un connecteur rapide (24).

4. Réseau de divertissement (10) selon l'une des revendications précédentes, **caractérisé en ce que** l'appareil de lecture (17) est un ordinateur portable et est, de préférence, une tablette numérique PC.

5. Réseau de divertissement (10) selon l'une des revendications 1 à 3, **caractérisé en ce que** l'appareil de routage (14) présente un routeur à haut débit de type WLAN, selon la norme 802.11n de l'IEEE, et est conçu en vue de la transmission radio dans une bande de fréquence ISM.

6. Réseau de divertissement (10) selon la revendication 4, **caractérisé en ce que** l'appareil de lecture (16, 17) est conçu en vue de la transmission radio dans la bande de fréquence ISM, par exemple entre 5,7 et 5,9 GHz, et la deuxième bande de fréquence comprend une plage de fréquence située entre 5,1 et 5,5 GHz.

7. Procédé destiné à la transmission de données audio et/ou vidéo en vue du divertissement de passagers dans un moyen de transport, **caractérisé par** les phases suivantes :
- enregistrement des données audio et/ou vidéo sur au moins un serveur de données (12) ;
- transmission des données audio et/ou vidéo depuis le serveur de données (12) vers au moins un dispositif de routage (14) en vue de la transmission des données sans fil, à haut débit ;
- transmission sans fil des données audio et/ou vidéo sous la forme d'un flux de données dans une première bande de fréquence depuis le dispositif de routage (14) vers des appareils de lecture (16, 17) mis à la disposition sous forme de prêt pour la durée du trajet pour au moins 20, de préférence pour au moins 60 passagers, en vue de la lecture des données audio et/ou vidéo sur l'appareil de lecture (16, 17) à la demande d'un passager ;
- transmission sans fil de données audio et/ou vidéo dans une deuxième bande de fréquence, différente de la première bande de fréquence, depuis le dispositif de routage (14) vers au moins un terminal de passager (18) individuel, lequel est un appareil que le passager a lui-même emmené avec lui, tel que par exemple un ordinateur portable, une tablette numérique PC ou un assistant numérique personnel, en vue de la sauvegarde des données audio et/ou vidéo à la demande du passager sur son terminal (18) ;
selon lequel le serveur de données (12) est en mesure de distinguer chaque terminal de passager (18) par rapport à un appareil de lecture (16, 17) et propose à un terminal de passager (18) d'autres données audio et/ou vidéo qu'à un appareil de lecture (16, 17).

8. Procédé selon la revendication 7, **caractérisé en ce que** l'appareil de lecture (17) est un ordinateur portable et de préférence une tablette numérique PC.

9. Procédé selon l'une des revendications 7 à 8, **caractérisé en ce que** le terminal de passager (18) et/ou l'appareil de lecture (16, 17) est relié à la toile mondiale (World Wide Web) (22) par l'intermédiaire du dispositif de routage (14), à la requête de l'appareil (16, 17, 18).

10. Procédé selon l'une des revendications 7 à 9, **caractérisé en ce que** l'appareil de lecture (16) est associé de manière fixe à un siège de passager et présente un écran intégré de fauteuil, lequel est supporté par un siège de passager, selon lequel l'appareil de lecture (16) est alimenté en courant électrique, de préférence par l'intermédiaire d'un connecteur rapide (24) à partir d'un réseau d'alimentation en tension (26) conçu dans le plancher de la cabine de passagers.

11. Procédé selon l'une des revendications 7 à 10, **caractérisé en ce que** les données audio et/ou vidéo sont transmises dans la deuxième bande de fréquence, par exemple entre 5,1 et 5,5 GHz, depuis un routeur à haut débit de type WLAN du dispositif de routage (14), conformément à la norme 802.11n de l'IEEE.

12. Procédé selon l'une des revendications 7 à 11, **caractérisé en ce que** la première bande de fréquence, dans laquelle les données audio et/ou vidéo sont retransmises depuis le dispositif de routage (14) sur l'appareil de lecture (16,17), est une bande de fréquence ISM, par exemple comprise entre 5,7 et 5,9 GHz.

13. Procédé selon l'une des revendications 7 à 12, **caractérisé en ce que** les données audio et/ou vidéo peuvent être transmises, de manière simultanée et indépendamment les unes des autres, sur au moins un appareil de lecture (16, 17) et au moins un terminal de passager (18).

14. Procédé selon l'une des revendications 7 à 13, **caractérisé en ce que** toute communication entre un terminal de passager (18) et chaque appareil de lecture (16, 17) est empêchée.

15. Procédé selon l'une des revendications 7 à 14, **caractérisé en ce que** le serveur de données est conçu en vue de la transmission et de l'installation de programmes de logiciel sur les appareils (16, 17, 18), par exemple en vue de la lecture des données audio et/ou vidéo.
